# EUROPÄISCHE PATENTSCHRIFT

(11) **EP 1 089 625 B1**
(45) Veröffentlichungstag und Bekanntmachung des Hinweises auf die Patenterteilung: **11.12.2002**
(21) Anmeldenummer: 99929178.4
(22) Anmeldetag: 11.06.1999
(51) Int. Cl.: A01N 43/72, A01N 43/84

(54) **EKTOPARASITIZIDE MITTEL**
ECTOPARASITICIDE AGENTS
AGENTS DE LUTTE CONTRE LES ECTOPARASITES

(30) Priorität: 24.06.1998 DE 19828043
(43) Veröffentlichungstag der Anmeldung: 11.04.2001
(73) Patentinhaber: Bayer Aktiengesellschaft, 51368 Leverkusen (DE)
(72) Erfinder: JESCHKE, Peter, D-51373 Leverkusen (DE); TURBERG, Andreas, D-42781 Haan (DE); MENCKE, Norbert, D-51381 Leverkusen (DE); HANSEN, Olaf, D-40789 Monheim (DE)
(86) Internationale Anmeldenummer: EP9904029
(87) Internationale Veröffentlichungsnummer: WO99066794

(56) Entgegenhaltungen:
- WO-A-95/27498
- WO-A-97/09331
- PATENT ABSTRACTS OF JAPAN vol. 18, no. 46 (C-1157), 25. Januar 1994 (1994-01-25) & JP 05 271013 A (MEIJI SEIKA KAISHA), 19. Oktober 1993 (1993-10-19)
- CHEMICAL ABSTRACTS, vol. 88, no. 25, 19. Juni 1978 (1978-06-19) Columbus, Ohio, US; abstract no. 184593, M.KANAOKA ET AL.: "Bassianolide, a new insecticidal cyclodepsipeptide from Beauveria bassiana and Verticillium lecanii" XP002117773 & AGRIC. BIOL. CHEM., Bd. 42, Nr. 3, 1978, Seiten 629-635,
- CHEMICAL ABSTRACTS, vol. 79, no. 25, 24. Dezember 1973 (1973-12-24) Columbus, Ohio, US; abstract no. 143503, M.C.PANSA ET AL.: "Toxicity of valinomycin on insects" XP002117774 & J. INVERTEBR. PATHOL., Bd. 22, Nr. 2, 1973, Seiten 148-152,

## Beschreibung

Die vorliegende Erfindung betrifft die Verwendung von cyclischen Depsipeptiden, insbesondere 24-gliedrigen Cyclodepsipeptiden, zur Bekämpfung von Ektoparasiten sowie ektoparasitizide Mittel, die Depsipeptide enthalten.

Cyclische Depsipeptide sowie ihre Herstellung und Verwendung als Parasitizide gegen Helminthen, Nematoden und Trematoden in Tieren (Endoparasitizide) sind bereits Gegenstand zahlreicher Veröffentlichungen.

Beispielsweise ist ein Cyclodepsipeptid mit der Bezeichnung PF 1022A und seine Wirkung gegen Endoparasiten bekannt (EP-OS 382 173 und EP-OS 503 538). Weitere cyclische Depsipeptide (Cyclooktadepsipeptide: WO 98/55 469; WO 98/43 965; WO 93/19 053; EP-OS 634 408; WO 94/19 334; WO 95/ 07 272; EP-OS 626 375; EP-OS 626 376; EP-OS 664 297; EP 634 408; EP-OS 718 298; WO 97/09 331; Cyclohexadepsipeptide: WO 93/ 25 543; WO 95/27 498; EP-OS 658 551; Cyclotetradepsipeptide: EP-OS 664 297; Dioxomorpholine: WO 96/38 165: JP 08 225 552) und offenkettige Depsipeptide (EP-OS 657 171; EP-OS 657 172; EP-OS 657 173; WO 97/07 093) und ihre endoparasitizide Wirkung sind beschrieben.

Es ist auch bereits bekannt, daß bestimmte 24-gliedrige Cyclodepsipeptide, beispielsweise Bassianolid und PF1022A, eine insektizide Aktivität gegen Seidenraupen aufweisen (vgl. M. Kanaoka et al., Agric. Biol. Chem. 43 (5), 1979, S. 1079-83; JP 05 271 013).

Die insektizide Wirksamkeit dieser vorbekannten Verbindungen ist jedoch, insbesondere bei niedrigen Aufwandmengen und -konzentrationen nicht in allen Anwendungsgebieten völlig zufriedenstellend. Zudem ist ihre Verwendung gegen Ektoparasiten, beispielsweise Zecke, Flöhe und Milben, noch nicht bekannt geworden.

Gegenstand der vorliegenden Anmeldung ist:
1. Verwendung von Cyclooctadepsipeptiden der Formel (I) 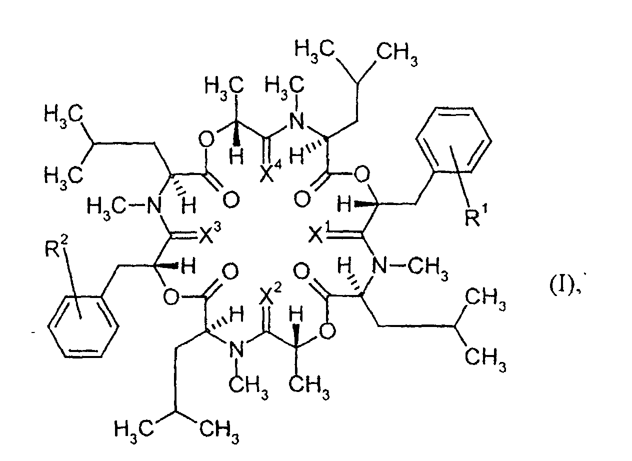
in welcher
- R¹: für Wasserstoff, C₁₋₄-Alkyl, insbesondere Methyl, Hydroxy, Halogen, insbesondere Fluor, C₁₋₄-Alkoxy, insbesondere Methoxy oder tert.-Butyloxy, C₁₋₄-Alkoxy-C₁₋₄-alkyl, insbesondere Methoxymethyl, Ethoxyethyl, Heterocyclylmethyl, insbesondere Pyridylmethyl, Tetrahydrofuranylmethyl, Pyrrolidinylmethyl, Furylmethyl, Thienylmethyl, Heteroaryl-C₁₋₂-alkoxy, insbesondere Pyridyl-methoxy, Tetrahydrofuryl-methoxy, Pyrrolidinyl-methoxy und Furyl-methoxy, Nitro, -NR³R⁴, -SO₂-NR³R⁴ steht,
- R²: für Wasserstoff, C₁₋₄-Alkyl, insbesondere Methyl, Hydroxy, Halogen, insbesondere Fluor, C₁₋₄-Alkoxy, insbesondere Methoxy oder tert.-Butyloxy, C₁₋₄-Alkoxy-C₁₋₄-alkyl, insbesondere Methoxymethyl, Ethoxyethyl, Heterocyclylmethyl, insbesondere Pyridylmethyl, Tetrahydrofuranylmethyl, Pyrrolidinylmethyl, Furylmethyl. Thienylmethyl, Heteroaryl-C₁₋₂-alkoxy, insbesondere Pyridyl-methoxy, Tetrahydrofuranyl-methoxy, Pyrrolidinyl-methoxy und Furylmethoxy, Nitro, -NR³R⁴, -SO₂-NR³R⁴ steht,
- R³ und R⁴: unabhängig voneinander jeweils für Wasserstoff, gegebenenfalls substituiertes C₁₋₄-Alkyl, Formyl, C₁₋₄-Alkoxycarbonyl, gegebenenfalls substituiertes Arylmethyl, insbesondere Benzyl, oder Heterocyclylmethyl, insbesondere Pyridylmethyl, Tetrahydrofuranylmethyl, Pyrrolidinylmethyl, Furylmethyl, Thienylmethyl, steht,
- R³ und R⁴: gemeinsam mit dem Stickstoffatom, an das sie gebunden sind, für einen gegebenenfalls substituierten mono- oder polycyclischen, gegebenenfalls überbrückten und/oder spirocyclischen, gesättigten oder ungesättigten Heterocyclus stehen, der ein bis drei weitere Heteroatome aus der Reihe Stickstoff, Sauerstoff und Schwefel enthalten kann,
- X¹, X², X³ und X⁴: unabhängig voneinander Sauerstoff oder Schwefel bedeuten,
wobei für den Fall, daß R¹ und R² gleichzeitig fiir Wasserstoff stehen, mindestens einer der Reste X¹, X², X³ und X⁴ für Schwefel steht.

Die Verbindungen der allgemeinen Formel (1) können in Abhängigkeit von der Art der Substituenten als geometrische und/oder optische Isomerengemische unterschiedlicher Zusammensetzung auftreten. Die Erfindung betrifft sowohl die reinen Isomeren als auch die Isomerengemische.

Die erfindungsgemäß verwendbaren Cyclooctadepsipeptide sind durch die Formel (I) allgemein definiert.

Die Substituenten R¹ und R² stehen bevorzugt in *para-* oder *ortho*-Position. Besonders bevorzugt ist die *para*-Position.

Die Substituenten X¹, X² und X³ stehen bevorzugt fiir Sauerstoff, der Substituent X4 bedeutet bevorzugt Sauerstoff oder Schwefel.

Als erfindungsgemäß verwendbare Verbindungen der allgemeinen Formel ( I ) seien insbesondere die aus den PCT-Anmeldungen WO 93/19 053, WO 97/11 064 und EP-OS 634 408 A1 bekannten Verbindungen der folgenden Formel (II) genannt: 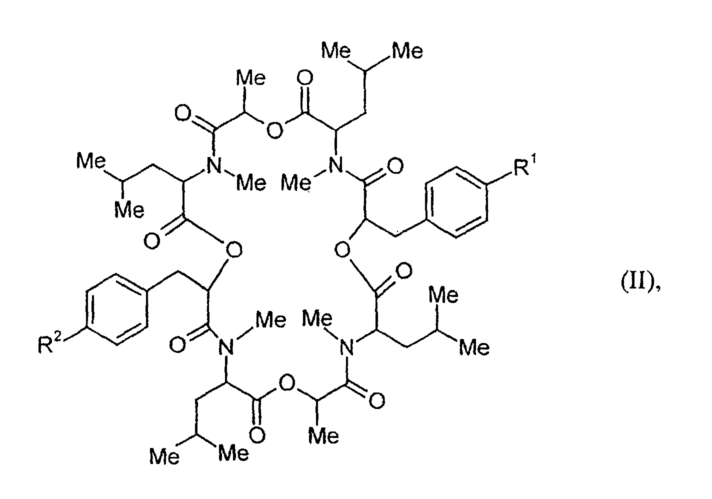 in welcher
- R¹ und R²: für gleiche oder verschiedene Reste aus der Reihe Wasserstoff, N-Morpholino, Nitro, Amino, Mono- und Dimethylamino, Furyltnethoxy, Tetrahydrofürylmethoxy, Pyrrolidinylmethoxy oder Pyridylmethoxy stehen, aber nicht gleichzeitig für Wasserstoff stehen.

Weiterhin seien die aus der PCT-Anmeldung WO 94/19 334 bekannten Verbindungen genannt.

Insbesondere seien aus den PCT-Anmeldungen WO 94/19 334 und WO 97/11 064 die Verbindungen der folgenden Formel (III) 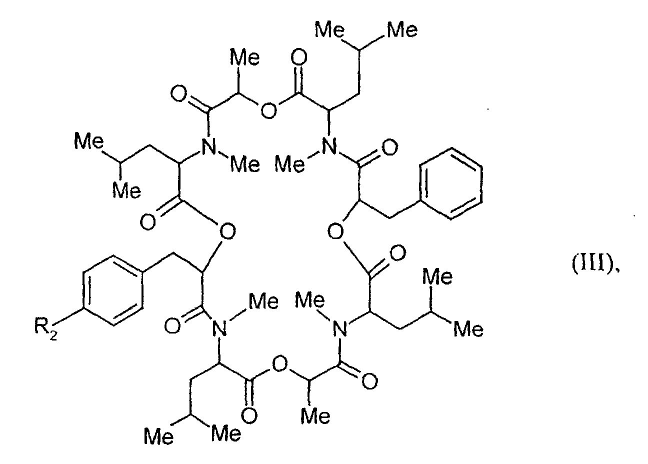 in welcher
- R²: für Hydroxy, Methoxy oder tert.-Butoxy und Furylmethoxy steht, genannt.

Schließlich seien die aus der PCT-Anmeldung WO 95/07 272 vorbekannten Verbindungen genannt.

Weiterhin und insbesondere werden als erfindungsgemäß verwendbare Verbindungen der allgemeinen Formel (I), in welcher mindestens einer der Substituenten X¹, X² und X³ und/oder X⁴ für Schwefel steht, die cyclischen Depsipeptide der allgemeinen Formel (IV) und (V) genannt: 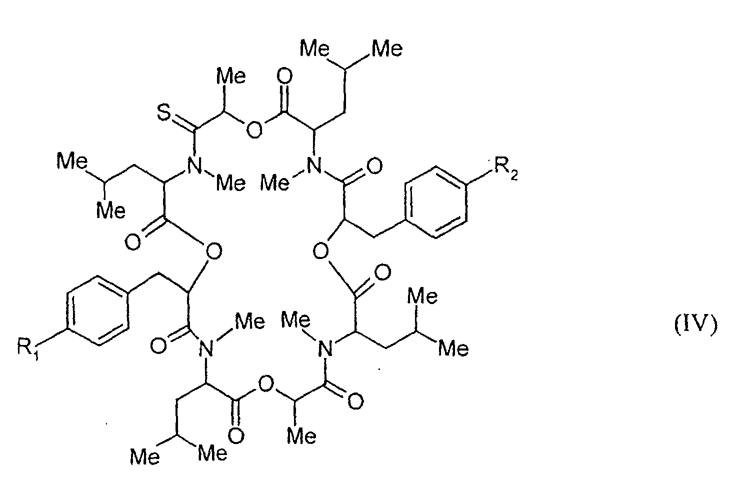 und 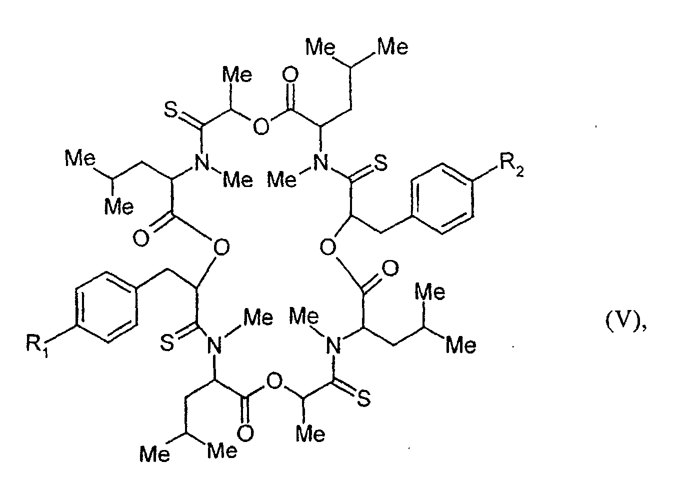 in welchen
- R¹ und R²: für gleiche oder verschiedene Reste aus der Reihe Wasserstoff, N-Morpholino, Nitro, Amino, Mono- und Dimethylamino, Furylmethoxy, Tetrahydrofurylmethoxy, Pyrrolidinomethoxy oder Pyridylmethoxy stehen.

Die cyclischen Depsipeptide der allgemeinen Formel (IV) und (V), sind Gegenstand einer vorveröffentlichen Patentanmeldung der Anmelderin (vgl. WO 98/43 965). Diese Verbindungen werden hergestellt, indem man Verbindungen der Formel (I), in welcher X¹, X² und X³ und X⁴ für Sauerstoff stehen, mit einem geeigneten Schwefelungsagens in Gegenwart eines Verdünnungsmittels thioniert. Hierzu wird auf die entsprechenden Herstellungsbeispiele weiter unten verwiesen.

Die crfindungsgemäß verwendbaren cyclischen Depsipeptide eignen sich bei günstiger Warmblütertoxizität zur Bekämpfung von tierischen Schädlingen wie Arthropoden, vorzugsweise Insekten, Spinnentieren, die in der Tierhaltung und Tierzucht bei Nutz-, Zucht-, Zoo-, Labor-, Versuchs- und Hobbytieren vorkommen. Sie sind dabei gegen alle oder einzelne Entwicklungsstadien der Schädlinge sowie gegen resistente und normal sensible Arten der Schädlinge wirksam.

Durch die Bekämpfung der tierischen Schädlinge sollen Krankheiten und deren Übertragung, Todesfälle und Leistungsminderungen (z.B. bei der Produktion von Fleisch, Milch, Wolle, Häuten, Eiern) verhindert werden, so daß durch den Einsatz der Wirkstoffe eine wirtschaftlichere und einfachere Tierhaltung möglich ist bzw. in bestimmten Gebieten erst möglich wird.

Zu den Schädlingen gehören:
Aus der Ordnung der Anoplura z.B. Haematopinus spp., Linognathus spp., Solenopotes spp., Pediculus spp., Pthirus spp.;
Aus der Ordnung der Mallophaga z.B. Trimenopon spp., Menopon spp., Eomenacanthus spp., Menacanthus spp., Trichodectes spp., Felicola spp., Damalinea spp., Bovicola spp.;
Aus der Ordnung der Diptera z.B. Chrysops spp., Tabanus spp., Musca spp., Hydrotaea spp., Muscina spp.. Haematobosca spp., Haematobia spp., Stomoxys spp., Fannia spp., Glossina spp., Lucilia spp., Calliphora spp., Auchmeromyia spp., Cardylobia spp., Cochiomyia spp., Chrysomyia spp., Sarcophaga spp., Wohlfartia spp., Gasterophilus spp., Oesteromyia spp., Oedemagena sp., Hypoderma spp., Oestrus spp., Rhinoestrus spp., Melophagus spp., Hippobosca spp.
Aus der Ordnung der Siphonaptera z.B. Ctenocephalides spp., Echidnophaga spp., Ceratophyllus spp.
Aus der Ordnung der Metastigmata z.B. Hyalomma spp., Rhipicephalus spp.. Boophilus spp., Amblyomma spp., Haemophysalis spp., Dermacentor spp., Ixodes spp., Argas spp., Ornithodorus spp., Otobius spp.;
Aus der Ordnung der Mesostigmata z.B. Dermanyssus spp., Ornithonyssus spp., Pneumonyssus spp.
Aus der Ordnung der Prostigmata z.B. Cheyletiella spp., Psorergates spp., Myobia spp., Demodex spp., Neotrombicula spp.;
Aus der Ordnung der Astigmata z.B. Acarus spp., Myocoptes spp., Psoroptes spp., Chorioptes spp., Otodectes spp., Sarcoptes spp., Notoedres spp., Knemidocoptes spp., Neoknemidocoptex spp., Cytodites spp., Laminosioptes spp.
Zu den Haus- und Nutztieren gehören Säugetiere wie z.B. Rinder, Schafe, Ziegen Pferde, Schweine, Hunde, Katzen, Kamele, Wasserbüffel, Esel, Kaninchen, Damwild, Rentiere, Pelztiere wie z.B. Nerze, Chinchilla, Waschbär, Vögel wie z.B. Hühner, Puten, Fasanen, Gänse, Enten.
Zu Labor- und Versuchstieren gehören Mäuse, Ratten, Meerschweinchen, Goldhamster, Hunde und Katzen.
Zu den Hobbytieren gehören Hunde und Katzen.

Die Anwendung kann sowohl prophylaktisch als auch therapeutisch erfolgen.

Die Anwendung der Wirkstoffe erfolgt direkt oder in Form von geeigneten Zubereitungen enteral, parenteral, dermal, nasal, durch Behandlung der Umgebung oder mit Hilfe wirkstoffhaltiger Formkörper wie z.B. Streifen, Platten, Bänder, Halsbänder, Medaillons, Ohrmarken, Gliedmaßenbänder, Markierungsvorrichtungen.

Die enterale Anwendung der Wirkstoffe geschieht z.B. oral in Form von Pulver, Zäpfchen, Tabletten, Kapseln, Tränken, Granulaten, Drenchen, Boli, medikiertem Futter oder Trinkwasser. Die dermale Anwendung geschieht z.B. in Form des Tauchens (Dip), Sprühens (Spray), Badens, Waschens, Aufgießens (pour-on and spoton), Einreibens und des Einpuderns. Die parenterale Anwendung geschieht z.B. in Form der Injektion (intramusculär, subcutan, intravenös, intraperitoneal) oder durch Implantate.

Geeignete Zubereitungen sind:
Lösungen wie Injektionslösungen, orale Lösungen, Konzentrate zur oralen Verabrcichung nach Verdünnung, Lösungen zum Gebrauch auf der Haut oder in Körperhöhlen, Aufgußformulierungen, Gele;
Emulsionen und Suspensionen zur oralen oder dermalen Anwendung sowie zu Injektion; Halbfeste Zubereitungen;
Formulierungen bei denen der Wirkstoff in einer Salbengrundlage oder in ciner Öl in Wasser oder Wasser in Öl Emulsionsgrundlage verarbeitet ist;
Feste Zubereitungen wie Pulver, Premixe oder Konzentrate, Granulate, Pellets, Tabletten, Boli, Kapseln; Aerosole und Inhalate, wirkstoffhaltige Formkörper.

Injektionslösungen werden intravenös, intramusculär und subcutan verabreicht.

Injektionslösungen werden hergestellt, indem der Wirkstoff in einem geeigneten Lösungsmittel gelöst wird und cventuell Zusätze wie Lösungsvermittler, Säuren, Basen, Puffersalze, Antioxidantien, Konservierungsmittel zugefügt werden. Die Lösungen werden steril filtriert und abgefüllt.

Als Lösungsmittel seien genannt: Physiologisch verträgliche Lösungsmittel wie Wasser. Alkohole wie Ethanol, Butanol, Benzylalkohol, Glycerin, Kohlenwasserstoffe, Propylenglykol, Polyethylenglykole, N-Methylpyrrolidon, sowie Gemische derselben.

Die Wirkstoffe lassen sich gegebenenfalls auch in physiologisch verträglichen pflanzlichen oder synthetischen Ölen, die zu Injektion geeignet sind, lösen.

Als Lösungsvermittler seien genannt: Lösungsmittel, die die Lösung des Wirkstoffs im Hauptlösungsmittel fördern oder sein Ausfallen verhindern. Beispiele sind Polyvinylpyrrolidon, polyoxyethyliertes Rhizinusöl, polyoxyethylierte Sorbitanester.

Konservierungsmittel sind: Benzylalkohol, Trichlorbutanol, p-Hydroxybenzoesäureester, n-Butanol.

Orale Lösungen werden direkt angewendet. Konzentrate werden nach vorheriger Verdünnung auf die Anwendungskonzentration oral angewendet. Orale Lösungen und Konzentrate werden wie oben bei den Injektionslösungen beschrieben hergestellt, wobei auf steriles Arbeiten verzichtet werden kann.

Lösungen zum Gebrauch auf der Haut werden aufgeträufelt, aufgestrichen, eingerieben, aufgespritzt, aufgesprüht oder durch Tauchen (Dippen, Baden oder Waschen) aufgebracht. Diese Lösungen werden wie oben bei den Injektionslösungen beschrieben hergestellt.

Es kann vorteilhaft sein, bei der Herstellung Verdickungsmittel zuzufügen. Verdickungsmittel sind: Anorganische Verdickungsmittel wie Bentonite, kolloidale Kieselsäure, Aluminiummonostearat, organische Verdickugsmittel wie Cellulosederivate, Polyvinylalkohole und deren Copolymere, Acrylate und Metacrylate.

Gele werden auf die Haut aufgetragen oder aufgestrichen oder in Körperhöhlen eingebracht. Gele werden hergestellt, indem Lösungen, die wie bei den Injektionslösungen beschrieben hergestellt worden sind, mit soviel Verdickungsmittel versetzt werden, daß eine klare Masse mit salbenartiger Konsistenz entsteht. Als Verdickungsmittel werden die weiter oben angegebenen Verdickungsmittel eingesetzt.

Aufgieß-Formulierungen werden auf begrenzte Bereiche der Haut aufgegossen oder aufgespritzt, wobei der Wirkstoff entweder die Haut durchdringt und systemisch wirkt oder sich auf der Körperoberfläche verteilt.

Aufgieß-Formulierungen werden hergestellt, indem der Wirkstoff in geeigneten hautverträglichen Lösungsmitteln oder Lösungsmittelgemischen gelöst, suspendiert oder emulgiert wird. Gegebenenfalls werden weitere Hilfsstoffe wie Farbstoffe, resorptionsfördemde Stoffe, Antioxidantien, Lichtschutzmittel, Haftmittel zugefügt.

Als Lösungsmittel seien genannt: Wasser, Alkanole, Glycole, Polyethylenglykole, Polypropylenglycole, Glycerin, aromatische Alkohole wie Benzylalkohol, Phenylethanol, Phenoxyethanol, Ester wie Essigester, Butylacetat, Benzylbenzoat, Ether wie Alkylenglykolalkylether wie Dipropylenglycolmonomethylether, Diethylenglykolmono-butylether, Ketone wie Aceton, Methylethylketon, aromatische und/oder aliphatische Kohlenwasserstoffe, pflanzliche oder synthetische Öle, DMF, Dimethylacetamid, N-Methylpyrrolidon, 2-Dimethyl-4-oxy-methylen-1,3-dioxolan.

Farbstoffe sind alle zur Anwendung am Tier zugelassenen Farbstoffe, die gelöst oder suspendiert sein können.

Resorptionsfördernde Stoffe sind z.B. DMSO, spreitende Öle wie Isopropylmyristat, Dipropylenglykolpelargonat, Silikonöle. Fettsäureester, Triglyceride, Fettalkohole.

Antioxidanticn sind Sulfite oder Metabisulfite wie Kaliummetabisulfat, Ascorbinsäure, Butylhydroxytoluol. Butylhydroxyanisol, Tocopherol.

Lichtschutzmittel sind z.B. Stoffe aus der Klasse der Benzophenone oder Novantisolsäure.

Haftmittel sind z.B. Cellulosederivate, Stärkederivate, Polyacrylate, natürliche Polymere wie Alginate, Gelatine.

Emulsionen können oral, dermal oder als Injektion angewendet werden.

Emulsionen sind entweder vom Typ Wasser in Öl oder vom Typ Öl in Wasser.

Sie werden hergestellt, indem man den Wirkstoff entweder in der hydrophoben oder in der hydrophilen Phase gelöst und diese unter Zuhilfenahme geeigneter Emulgatoren und gegebenenfalls weiterer Hilfsstoffe wie Farbstoffe, resorptionsfördernde Stoffe, Konservierungsstoffe, Antioxidantien, Lichtschutzmittel, viskositätserhöhende Stoffe, mit dem Lösungsmittel der anderen Phase homogenisiert.

Als hydrophobe Phase (Öle) seien genannt: Paraffinöle, Silikonöle, natürliche Pflanzenöle wie Sesamöl, Mandelöl, Rizinusöl, synthetische Triglyceride wie Capryl/Caprinsäure-biglycerid, Triglyceridgemisch mit Pflanzenfettsäure der Kettenlänge C₈₋₁₂ oder anderen speziell ausgewählten natürlichen Fettsäuren. Partialglyceridgemische gesättigter oder ungesättigter eventuell auch hydroxylgruppenhaltiger Fettsäuren, Mono- und Diglyceride der C₈/C₁₀-Fettsäuren.

Fettsäureester wie Ethylstearat, Di-n-butyryl-adipat, Laurinsäurehexylester, Dipropylen-glykolpelargonat, Ester einer verzweigten Fettsäure mittlerer Kettenlänge mit gesättigten Fettalkoholen der Kettenlänge C₁₆-C₁₈, Isopropylmyristat, Isopropylpalmitat, Cypryl/Caprinsäureester von gesättigten Fettalkoholen der Kettelänge C₁₂-C₁₈, Isopropylstearat, Ölsäureoleylester, Ölsäuredecylester, Ethyloleat, Milchsäureethylester, wachsartige Fettsäureester wie künstliches Entenbürzeldrüsenfett, Dibutylphthalat, Adipinsäurediisopropylester, letzterem verwandte Estergemische u.a.

Fettalkohole wie Isotridecylalkohol, 2-Octyldodecanol, Cetylstearyl-alkohol, Oleylalkohol.

Fettsäuren wie z.B. Ölsäure und ihre Gemische.

Als hydrophile Phase seien genannt:
Wasser, Alkohole wie z.B. Propylenglykol, Glycerin, Sorbitol und ihre Gemische;
Als Emulgatoren seien genannt: nichtionogene Tenside, z.B. polyoxyethyliertes Rizinusöl, polyoxyethyliertes Sorbitan-monooleat, Sorbitanmonostearat, Glycerinmonostearat, Polyoxyethylstearat, Alkylphenolpolyglykolether;
ampholytische Tenside wie Di-Na-N-lauryl-β-iminodipropionat oder Lecithin;
anionaktive Tenside, wie Na-Laurylsulfat, Fettalkoholethersulfate, Mono/Dialkylpolyglykoletherorthophosphorsäureester-monoethanolaminsalz;
kationaktive Tenside wie Cetyltrimethylammoniumchlorid.

Als weitere Hilfsstoffe seien genannt: Viskositätserhöhende und die Emulsion stabilisierende Stoffe wie Carboxymethylcellulose, Methylcellulose und andere Celluloseund Stärke-Derivate, Polyacrylate, Alginate, Gelatine, Gummi-arabicum. Polyvinylpyrrolidon, Polyvinylalkohol, Copolymere aus Methylvinylether und Maleinsäureanhydrid, Polyethylenglykole, Wachse, kolloidale Kieselsäure oder Gemische der aufgeführten Stoffe.

Suspensionen können oral, dermal oder als Injektion angewendet werden. Sie werden hergestellt, indem man den Wirkstoff in einer Trägerflüssigkeit gegebenenfalls unter Zusatz weiterer Hilfsstoffe wie Netzmittel, Farbstoffe, resorptionsfördemde Stoffe, Konservierungsstoffe, Antioxidantien Lichtschutzmittel suspendiert.

Als Trägerflüssigkeiten seien alle homogenen Lösungsmittel und Lösungsmittelgemische genannt.

Als Netzmittel (Dispergiermittel) seien die weiter oben angegebene Tenside genannt.

Als weitere Hilfsstoffe seien die weiter oben angegebenen genannt.

Halbfeste Zubereitungen können oral oder dermal verabreicht werden. Sie unterscheiden sich von den oben beschriebenen Suspensionen und Emulsionen nur durch ihre höhere Viskosität.

Zur Herstellung fester Zubereitungen wird der Wirkstoff mit geeigneten Trägerstoffen gegebenenfalls unter Zusatz von Hilfsstoffen vermischt und in die gewünschte Form gebracht.

Als Trägerstoffe seien genannt alle physiologisch verträglichen festen Inertstoffe. Alle solche dienen anorganische und organische Stoffe. Anorganische Stoffe sind z.B. Kochsalz, Carbonate wie Calciumcarbonat, Hydrogencarbonate, Aluminiumoxide, Kieselsäuren. Tonerden, gefälltes oder kolloidales Siliciumdioxid, Phosphate.

Organische Stoffe sind z.B. Zucker-, Zellulose, Nahrungs- und Futtermittel wie Milchpulvcr, Tiermehle, Getreidemehle und -schrote, Stärken.

Hilfsstoffe sind Konservierungsstoffe, Antioxidantien, Farbstoffe, die bereits weiter oben aufgeführt worden sind.

Weitere geeignete Hilfsstoffe sind Schmier- und Gleitmittel wie z.B. Magnesiumstcarat, Stearinsäure, Talkum, Bentonite, zerfallsfördernde Substanzen wie Stärke oder quervernetztes Polyvinylpyrrolidon, Bindemittel wie z.B. Stärke, Gelatine oder lineares Polyvinylpyrrolidon sowie Trockenbindemittel wie mikrokristalline Cellulose.

Die Wirkstoffe können in den Zubereitungen auch in Mischung mit Synergisten oder mit anderen Wirkstoffen vorliegen.

Anwendungsfertige Zubereitungen enthalten den Wirkstoff in Konzentrationen von 10 ppm bis 20 Gew.-%, bevorzugt von 0,1 bis 10 Gew.-%.

Zubereitungen die vor Anwendung verdünnt werden, enthalten den Wirkstoff in Konzentrationen von 0,5 bis 90 Gew.-%, bevorzugt von 5 bis 50 Gew.-%.

Im allgemeinen hat es sich als vorteilhaft erwiesen, Mengen von etwa 1 bis 100 mg Wirkstoff je kg Körpergewicht pro Tag zur Erzielung wirksamer Ergebnisse zu verabreichen.

Geeignete Beispiele für Formulierungen der erfindungsgemäß verwendbaren Depsipeptide werden im folgenden angegeben, ohne damit die Erfindung in irgendeiner Weise zu begrenzen:

### Beispiele

### Beispiel 1

### SC-(Suspensionskonzentrat) Formulierung:

| | |
|---|---|
| 368 g | Wirkstoff der Formel (I) |
| 35 g | Blockpolymer aus Emulgator Ethylenoxid- und Propylenoxid |
| 12 g | Ditolylethersulfonat-Formaldehyd-Kondensat (Emulgator) |
| 3,5 g | wasserlöslicher Polyvinylalkohol |
| 58,0 g | NH₄Cl |
| 116,0 g | Harnstoff |
| 1,2 g | (37 %ige wäßrige Salzsäure) |
| 4,6 g | Xanthan-gum |
| 560,5 g | destilliertes Wasser |

### Beispiel 2

### WP (dispergierbares Pulver-Formulierung:

| | |
|---|---|
| 25,0 g | Wirkstoff der Formel (I) |
| 1,0 g | Diisobutyl-naphthalin-Na-sulfonat |
| 10,0 g | n-Dodecylbenzylsulfonsäure Calcium |
| 12,0 g | hochdisperser Kieselsäure-haltiger Alkylarylpolyglykolether |
| 3,0 g | Ditolylethersulfonat-Formaldehyd-Kondensat (Emulgator) |
| 2,0 g | ®Baysilon-E, ein siliconhaltiger Entschäumer der Fa. Bayer AG |
| 2,0 g | feindisperses Siliciumdioxid und |
| 45,0 g | Kaolin |

### Beispiel 3

### SL-(wasserlösliche Konzentrat)-Formulierung

| | |
|---|---|
| 18,3 g | Wirkstoff der Formel (I) |
| 2,5 g | neutraler Emulgator auf Basis Alkylarylpolyglykolether |
| 3,5 g | Natriumsuifobernsteinsäurediisooctylester |
| 38,4 g | Dimethylsulfoxid und |
| 37,5 g | 2-Propanol |

### Beispiel 4

### SL-(wasserlösliche Konzentrat)-Formulierung

| | |
|---|---|
| 185, g | Wirkstoff der Formel (I) |
| 5,0 g | Natriumsulfonbernsteinsäurediisooctylester und |
| 76,5 g | Dimethylsulfoxid |

werden einer 100 g Schampoo-Formulierung bestehend aus

| | |
|---|---|
| 44,4 Gew.-% | Marlon AT 50, ein Triethanolaminsalz von Alkylbenzolsulfonsäuren der Fa. Hüls AG |
| 11,1 Gew.-% | Marlon A 350, Natriumsalz von Alkylbenzolsulfonsäuren der Fa. Hüls AG |
| 3,0 Gew.-% | Kondensationsprodukt von Ölsäuren und Diethanolamin der Fa. Hüls AG und |
| 41,5 Gew.-% | Polyethylenglykol |

beigemengt.

### Beispiel 5

### Spray-Formulierung bestehend aus

| | |
|---|---|
| 2,0 g | Wirkstoff der Formel (I) |
| 10,0 g | Dimethylsulfoxid |
| 35,0 g | 2-Propanol und |
| 53,0 g | Aceton |

Im folgenden werden einige Herstellungsbeispiele für Verbindungen der Formel (I) angegeben, in welcher X¹, X², X³ und/oder X⁴ für Schwefel stehen:

### Beispiel 6

### Cyclo(-N-methyl-L-leucinyl-D-thiolactyl-N-methyl-L-leucirtyl-D-phenylthiolactyl-N-methyl-L-leucinyl-D-thiolactyl-N-methyl-L-leucinyl-D-phenylthiolactyl-)

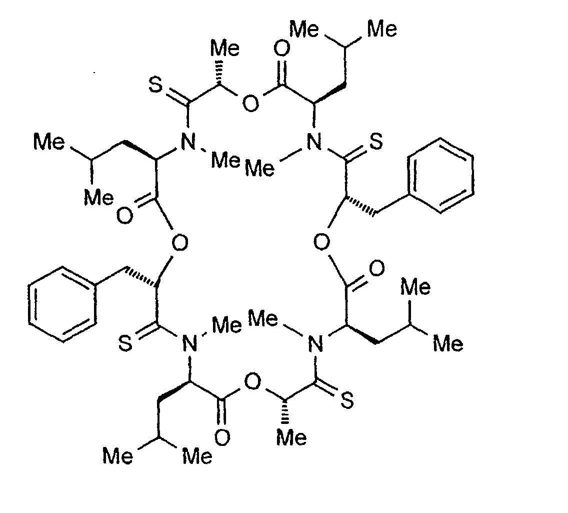

1,0 g (1,05 mMol) Cyclo(-N-methyl-L-leucinyl-D-lactyl-N-methyl-L-leucinyl-Dphenyllactyl-N-methyl-L-leucinyl-D-lactyl-N-methyl-L-leucinyl-D-phenyllactyl-) PF 1022A *(vgl. EP-OS 382 173, US-Pat. 5116 815)* wurden in 20 ml Toluol mit 1,4 g (3,5 mMol) 2,4-Bis-(4-methoxy-phenyl)-2,4-dithioxo-1,3,2,4-dithiadiphosphetan ("Lawesson's Reagens") versetzt und 3,5 Stunden unter Rückflußtemperatur gerührt. Anschließend wird der gesamte Reaktionsansatz auf 0°C abgekühlt, filtriert und das erhaltene Filtrat im Vakuum eingeengt. Das zurückbleibende Rohprodukt wird über eine Kieselgelsäule (Kieselgel 60 - Merck, Korngröße: 0,04 bis 0.063 mm) zunächst mit dem Fließmittel Methylenchlorid und anschließend mit dem Fließmittel Cyclohexan : Aceton ( 3 : 1 ) chromatographiert. Man erhält 0,46 g (43,6 % der Theorie) Cyclo(-N-methyl-L-leucinyl-D-thiolactyl-N-methyl-L-leucinyl-D-phenylthiolactyl-N-methyl-L-leucinyl-D-thiolactyl-N-methyl-L-leucinyl-D-phenylthiolactyl-).

¹H-NMR (CDCl₃, δ): 2,99, 3,06, 3,26, 3,42 (4 x -N-Mc); 4,86, 6,42, 6,61 (4 x -N-CH₂-);
5,31, 5,55, 5,81, 5,89 (4 x -O-CH₂-); 7,26 (Phenyl-H) ppm.

LC-MS (sauer) m/z(%): 1013 (M⁺, 100); 310 (21); 274 (30); 198 (42).
*C*_{*52*}*H*_{*76*}*N*_{*4*}*O*_{*8*}*S*_{*4*} *(1013.4)*

### Beispiel 7

### Cyclo(-N-methyl-L-leucinyl-D-thiolactyl-N-methyl-L-leucinyl-D-4-nitro-phenylthiolactyl-N-methyl-L-leucinyl-D-thiolactyl-N-methyl-L-leucinyl-D-4-nitro-phenylthiolactyl-)

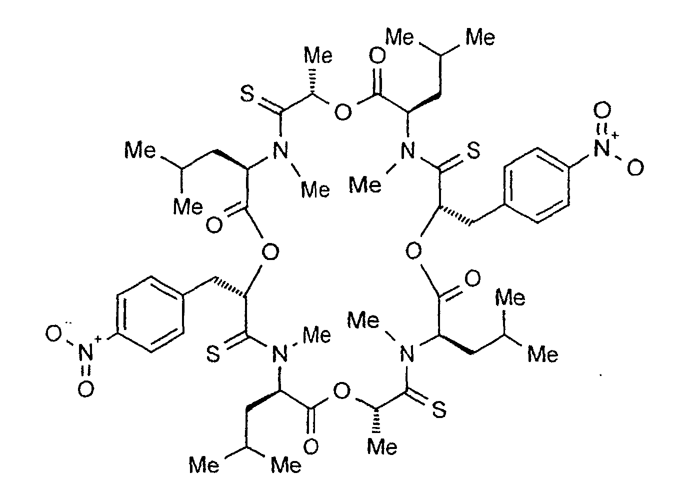

Die Thionierung erfolgt analog der Reaktionsvorschrift des Beispiels 1 unter Verwendung von:

| | |
|---|---|
| 0,50 g (0,48 mMol) | Cyclo(-N-methyl-L-leucinyl-D-lactyl-N-methyl-L-leucinyl-D-4-nitro-phenyllactyl-N-methyl-L-leucinyl-D-lactyl-N-methyl-L-leucinyl-D-4-nitro-phenyllactyl-) *(vgl. WO 93*/*19 053, EP-OS 634 408)* |
| 0,65 g (1,59 mMol) | 2,4-Bis-(4-methoxy-phenyl)-2,4-dithioxo-1,3,2,4-dithiadiphosphetan ("Lawesson's Reagens") |
| 10 ml | absolutes Toluol |

Das zurückbleibende Rohprodukt wird über eine Kieselgelsäule (Kieselgel 60 - Merck, Korngröße: 0,04 bis 0,063 mm) zunächst mit dem Fließmittel Methylenchlorid und anschließend mit dem Fließmittel Cyclohexan : Aceton ( 3 : 1 ) chromatographiert. Man erhält 0,34 g (63,8 % der Theorie) Cyclo(-N-methyl-L-leucinyl-D-thiolac-tyl-N-methyl-L-leucinyl-D-4-nitro-phenylthiolactyl-N-methyl-L-leucinyl-D-thiolactyl-N-methyl-L-leucinyl-D-4-nitro-phenylthiolactyl-).

¹H-NMR (CDCl₃, δ): 3,04, 3,09, 3,25, 3,50 (4 x -N-Me); 4,87, 6,38, 6.56, 6,63 (4 x -N-CH₂-); 5,31, 5.52, 5,81, 5,91 (4 x -O-CH₂-); 8,17; 7,46 (Aryl-H) ppm.

LC-MS (sauer) m/z (%): 1103 (M+H, 100); 392 (38); 177 (40); 136 (30),
*C*_{*52*}*H*_{*74*}*N*_{*6*}*O*_{*12*}*S*_{*4*} *(1103,4)*

### Beispiel 8

### Cyclo(-N-methyl-L-leucinyl-D-thiolactyl-N-methyl-L-leucinyl-D-4-N-morphalino-phenylthiolactyl-N-methyl-L-leucinyl-D-thiolactyl-N-methyl-L-leucinyl-D-4-N-morpholino-phenylthiolactyl-)

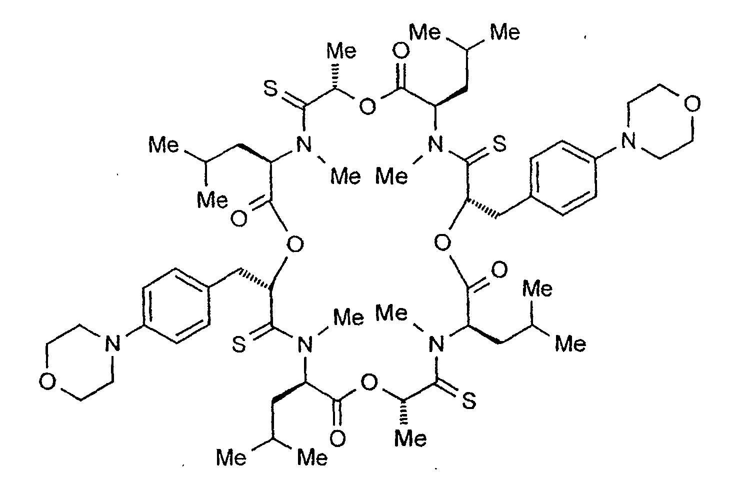

Die Thionierung erfolgt analog der Reaktionsvorschrift des Beispiels 1 unter Verwendung von:

| | |
|---|---|
| 0,50 g (0,44 mMol) | Cyclo(-N-methyl-L-leucinyl-D-lactyl-N-methyl-L-leucinyl-D-4-N-morpholino-phenyllactyl-N-methyl-L-leucinyl-D-lactyl-N-methyl-L-leucinyl-D-4-N-morpholino-phenyllactyl-) *(vgl. WO 93*/*19 053, EP-OS 634 408)* |
| 0,60 g (1,48 mMol) | 2,4-Bis-(4-methoxy-phenyl)-2,4-dithioxo-1,3,2,4-dithiadiphos-phetan ("Lawesson's Reagens"). |
| 10 ml | absolutes Toluol |

Das zurückbleibende Rohprodukt wird über eine Kieselgelsäule (Kieselgel 60 - Merck, Korngröße: 0,04 bis 0,063 mm) zunächst mit dem Fließmittel Methylenchlorid und anschließend mit dem Fließmittel Cyclohexan : Aceton ( 3 :1 chromatographiert. Man erhält 0,37 g (70,0 % der Theorie) Cyclo(-N-methyl-L-leucinyl-D-thiolactyl-N-methyl-L-leucinyl-D-4-N-morpholino-phenylthiolactyl-N-methyl-L-leucinyl-D-thiolactyl-N-methyl-L-leucinyl-D-4-N-morpholino-phenylthiolactyl-).

¹H-NMR (CDCl₃, δ): 3,01, 3,08, 3,26, 3,40 (4 x -N-Me); 3,12, 3,85 (2 x Mor); 4,85, 6,42, 6,62 (4 x -N-CH₂-); 5,30, 5,55, 5,78, 5,88 (4 x -O-CH₂-); 6,81, 7,26 (Aryl-H) ppm.

### Beispiel 9

### Cyclo(-N-methyl-L-leucinyl-D-thiolactyl-N-methyl-L-leucinyl-D-4-N-morpholino-phenyllactyl-N-methyl-L-leucinyl-D-lactyl-N-methyl-L-leucinyl-D-4-N-morpholino-phenyllactyl-)

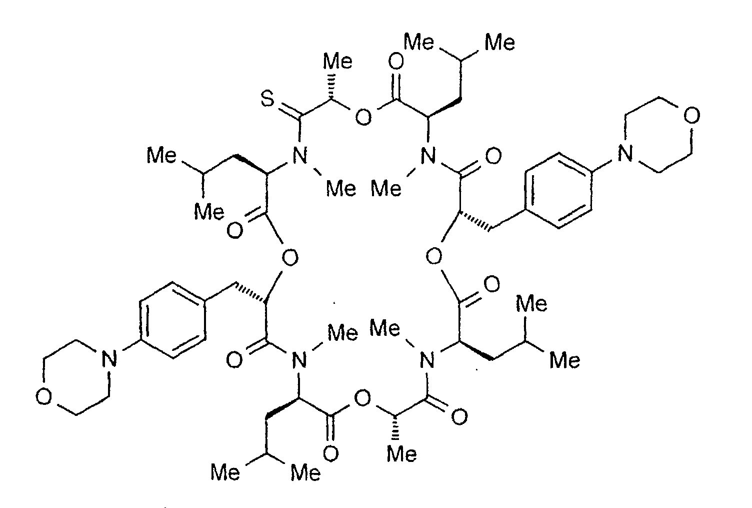

Die Thionierung crfolgt analog der Reaktionsvorschrift des Beispiels 7 unter Verwendung von:

| | |
|---|---|
| 0,41 g (0,37 mMol) | Cyclo(-N-methyl-L-leucinyl-D-lactyl-N-methyl-L-leucinyl-D-4-N-morpholino-phenyllactyl-N-methyl-L-leucinyl-D-lactyl-N-methyl-L-leucinyl-D-4-N-morpholino-phenyllactyl-) *(vgl. WO 93*/*19 053, EP-OS 634 408)* |
| 0,36 g (0,73 mMol) | 2,4-Bis-(4-phenoxy-phenyl)-2,4-dithioxo-1,3,2,4-dithiadiphosphetan ("Belleau's Reagens") |
| 10 ml | absolutes Toluol |

Das zurückbleibende Rohprodukt wird über eine Kieselgelsäule (Kieselgel 60 - Merck, Korngröße: 0,04 bis 0,063 mm) mit dem Fließmittel Cyclohexan : Aceton (3 : 1 ) chromatographiert. Man erhält 0,70 g (16,8 % der Theorie) Cyclo(-N-methyl-L-leucinyl-D-thiolactyl-N-methyl-L-leucinyl-D-4-N-morpholino-phenyllactyl-N-methyl-L-leucinyl-D-lactyl-N-methyl-L-leucinyl-D-4-N-morpholino-phenyllactyl-).

LC-MS (sauer) m/z(%): 1135 (M⁺, 56); 361 (100).
*C*_{*60*}*H*_{*90*}*N*_{*6*}*O*_{*13*}*S (1135,4)*
Rₜ(HPLC): 16.53 min.

### Beispiel 10

### Cyclo(-N-methyl-L-leucinyl-D-thiolactyl-N-methyl-L-leucinyl-D-4-nitro-phenyllactyl-N-methyl-L-leucinyl-D-lactyl-N-methyl-L-leucinyl-D-4-niro-phenyllactyl-)

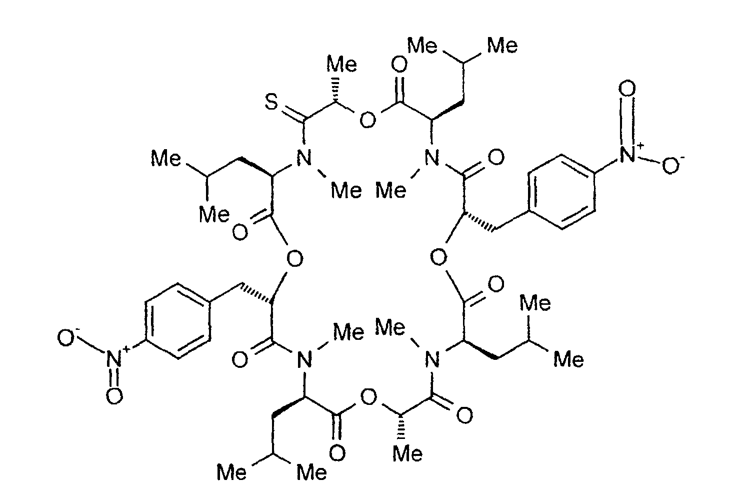

Die Thionierung erfolgt analog der Reaktionsvorschrift des Beispiels 7 unter Verwendung von:

| | |
|---|---|
| 0,50 g (0,48 mMol) | Cyclo(-N-methyl-L-leucinyl-D-lactyl-N-methyl-L-leucinyl-D-4-nitro-phenyllactyl-N-methyl-L-leucinyl-D-lactyl-N-methyl-L-leucinyl-D-4-nitro-phenyllactyl-) *(vgl. WO 93*/*19 053, EP-OS 634 408)* |
| 0,24 g (0,48 mMol) | 2,4-Bis-(4-phenoxy-phenyl)-2,4-dithioxo-1,3,2,4-dithiadiphosphetan ("Belleau's Reagens") |
| 10 ml | absolutes Tetrahydrofuran |

Man rührt das Reaktionsgemisch 24 Stunden bei 50°C und engt im Vakuum ein. Das zurückbleibende Rohprodukt wird über eine Kieselgelsäule (Kieselgel 60 - Merck, Korngröße: 0,04 bis 0,063 mm) mit dem Fließmittcl Cyclohexan : Aceton (4 : 1 ) chromatographiert. Anschließend wird das Produkt nochmals mittels präparativer HPLC (Gradient: Wasser/Acetonitril) gereinigt. Man erhält 16 mg (3,1 % der Theorie) Cyclo(-N-methyl-L-leucinyl-D-thiolactyl-N-methyl-L-leucinyl-D-4-nitro-phenyllactyl-N-methyl-L-leucinyl-D-lactyl-N-methyl-L-leucinyl-D-4-nitro-phenyllactyl-).

LC-MS (sauer) m/z (%): 1056 (M+H, 38).
*C*_{*52*}*H*_{*74*}*N*_{*6*}*O*_{*15*}*S (1055,3)*
Rₜ (HPLC): 17,38 min.

### Beispiel 11

### Cyclo(-N-methyl-L-leucinyl-D-thiolactyl-N-methyl-L-leucinyl-D-4-(pyrid-2-yl-methoxy)-phenyllactyl-N-methyl-L-leucinyl-D-lactyl-N-methyl-L-leucinyl-D-4-(pyrid-2-yl-methoxy)-phenyllactyl-)

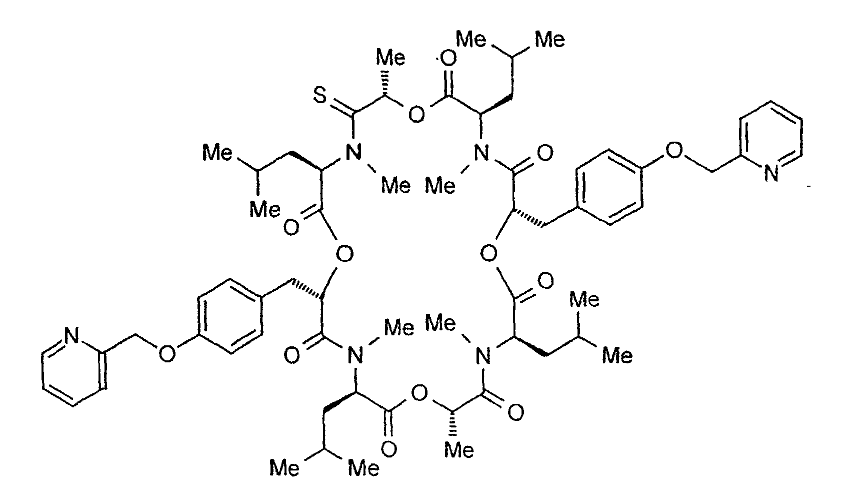

Die Thionierung erfolgt analog der Reaktionsvorschrift des Beispiels 9 unter Verwendung von

| | |
|---|---|
| 0,41 g (0,35 mMol) | Cyclo(-N-methyl-L-leucinyl-D-lactyl-N-methyl-L-leucinyl-D-4-(pyrid-2-yl-methoxy)-phenyllactyl-N-methyl-L-leucinyl-D-lactyl-N-methyl-L-leucinyl-D-4-(pyrid-2-ylmethoxy)-phenyllactyl-) *(vgl. WO 97*/*11 064)* |
| 0,57 g (1,41 mMol) | 2,4-Bis-(4-methoxy-phenyl)-2,4-dithioxo-1,3,2,4-dithiadiphosphetan ("Belleau's Reagens") |
| 10 ml | absolutes Tetrahydrofuran |

Das zurückbleibende Rohprodukt wird über eine Kieselgelsäule (Kieseigel 60 - Merck, Korngröße: 0,04 bis 0,063 mm) zunächst mit dem Fließmittel Methylenchlorid und anschließend mit dem Fließmittel Cyclohexan : Aceton ( 4 : 1 ) chromatographiert. Man erhält 53,9 mg (13,0 % der Theorie) Cyclo(-N-methyl-L-leucinyl-D-thiolactyl-N-methyl-L-leucinyl-D-4-(pyrid-2-yl-methoxy)-phenyllactyl-N-methyl-L-leucinyl-D-lactyl-N-methyl-L-leucinyl-D-4-(pyrid-2-yl-methoxy)-phenyl lactyl-).

¹³C-NMR (CDCl₃, δ): 204,9; 205,8 ppm (-NMe-C=S) / 2 Konformationsisomere.

LC-MS (loop) m/z (%): 1179 (M⁺, 100).
*C*_{*64*}*H*_{*86*}*N*_{*6*}*O*_{*13*} *S (1179,5)*

### Beispiel 12

### Cyclo(-N-methyl-L-leucinyl-D-thiolactyl-N-methyl-L-leucinyl-D-4-(fur-2-yl-methoxy)-phenyllactyl-N-methyl-L-leucinyl-D-lactyl-N-methyl-L-leucinyl-D-4-(fur-2-yl-methoxy)-phenyllactyl-)

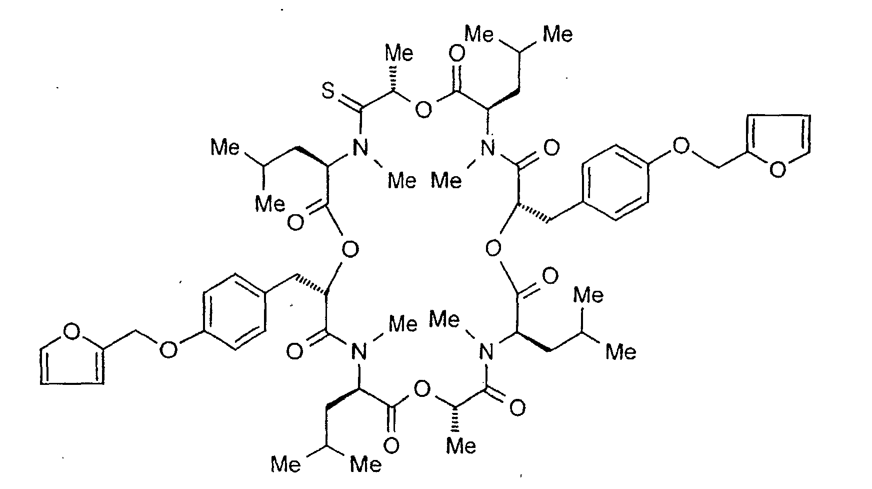

Die Thionierung erfolgt analog der Reaktionsvorschrift des Beispiels 9 unter Verwendung von

| | |
|---|---|
| 0,47 g (0,41 mMol) | Cyclo(-N-methyl-L-leucinyl-D-lactyl-N-methyl-L-leucinyl-D-4-(fur-2-yl-methoxy)-phenyllactyl-N-methyl-L-leucinyl-D-lactyl-N-methyl-L-lcucinyl-D-4-(fur-2-yl-methoxy)-phenyllactyl-) *(vgl. WO 97*/*11 064)* |
| 0,20 g (0,41 mMol) | 2,4-Bis-(4-phenoxy-phenyl)-2,4-dithioxo-1,3,2,4-dithiadiphosphetan ("Belleau's Reagens") |
| 10 ml | absolutes Tetrahydrofuran |

Das zurückbleibende Rohprodukt wird über eine Kieselgelsäule (Kieselgel 60 - Merck, Korngröße: 0,04 bis 0,063 mm) zunächst mit dem Fließmittel Methylenchlorid und anschließend mit dem Fließmittel Cyclohexan : Aceton ( 4 : 1 ) chromatographiert. Man erhält 130 mg (27,3 % der Theorie) Cyclo(-N-methyl-L-leucinyl-D-thiolactyl-N-methyl-L-leucinyl-D-4-(fur-2-yl-methoxy)-phenyllactyl-N-methyl-L-leucinyl-D-lactyl-N-methyl-L-leucinyl-D-4-(fur-2-yl-methoxy)-phenyllactyl-).

¹³C-NMR (CDCl₃, δ): 204,9; 205,8 ppm (-NMe-C=S) / 2 Konformationsisomere.

LC-MS (sauer) m/z (%): 1158 (M+H, 100).
*C*_{*62*}*H*_{*84*}*N*_{*4*}*O*_{*15*}*S(1157,4)*
Rₜ(HPLC): 17,85 min.

### Beispiel 13

### Cyclo(N-methyl-L-leucinyl-D-thiolactyl-N-methyl-L-leucinyl-D-4-(fur-2-yl-methoxy)-phenyllactyl-N-methyl-L-leucinyl-D-lactyl-N-methyl-L-leucinyl-D-phenyllactyl-)

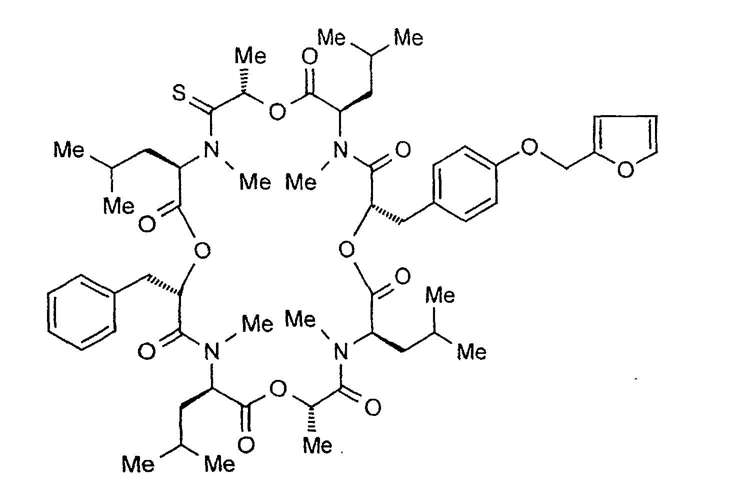

Die Thionierung erfolgt analog der Reaktionsvorschrift des Beispiels 9 unter Verwendung von:

| | |
|---|---|
| 0,40 g (0,38 mMol) | Cyclo(-N-methyl-L-leucinyl-D-lactyl-N-methyl-L-leuicinyl-D-4-(fur-2-yl-methoxy)-phenyllactyl-N-methyl-L-leucinyl-D-lactyl-N-methyl-L-leucinyl-D-phenyllactyl-) (vgl. WO 97/11 064) |
| 0,20 g (0,38 mMol) | 2,4-Bis-(4-phenoxy-phenoyl)2,4-dithioxo-1,3,2,4-dithiadiphosphetan ("Belleau's Reagens") |
| 10ml | absolutes Tetrahydrofuran |

Das zurückbleibende Rohprodukt wird über eine Kieselgelsäule (Kieselgel 60-Merck, Korngröße: 0,04 bis 0,063 mm) zunächst mit dem Fließmittel (Methylenchlorid und anschließend mit dem fließmittel Cyclohexan:Aceton (4:1) chromatographiert. Man erhält 46,1 mg (11,4 % der Theorie) Cyclo(N-methyl-L-leucinyl-D-thiolactyl-N-methyl-L-leucinyl-D-4-(fur-2yl-methoxy)-phenyllactyl-N-methyl-L-leucinyl-D-lactyl-N-methyl-L-leucinyl-D-phenyllactyl-).

LC-MS (loop) m/z (%): 1061 (M⁺, 100).
*C*_{*57*}*H*_{*80*}*O*_{*13*}*S (1061,3)*
Rₜ(HPLC): 17,55 min.

Die insektizide und akarizide Wirkung der erfindungsgemäß verwendbaren Verbindungen geht aus den nachfolgenden Beispielen hervor. In diesen Beispielen werden Wirkstoffe der nachfolgenden Tabelle eingesetzt:

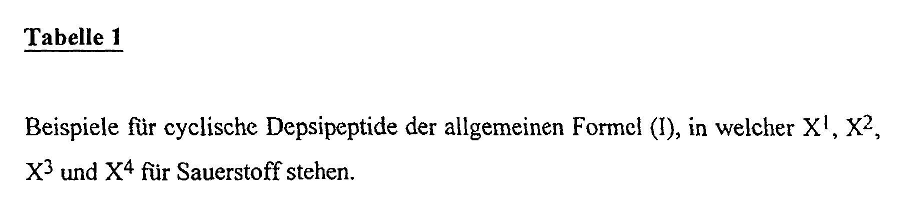

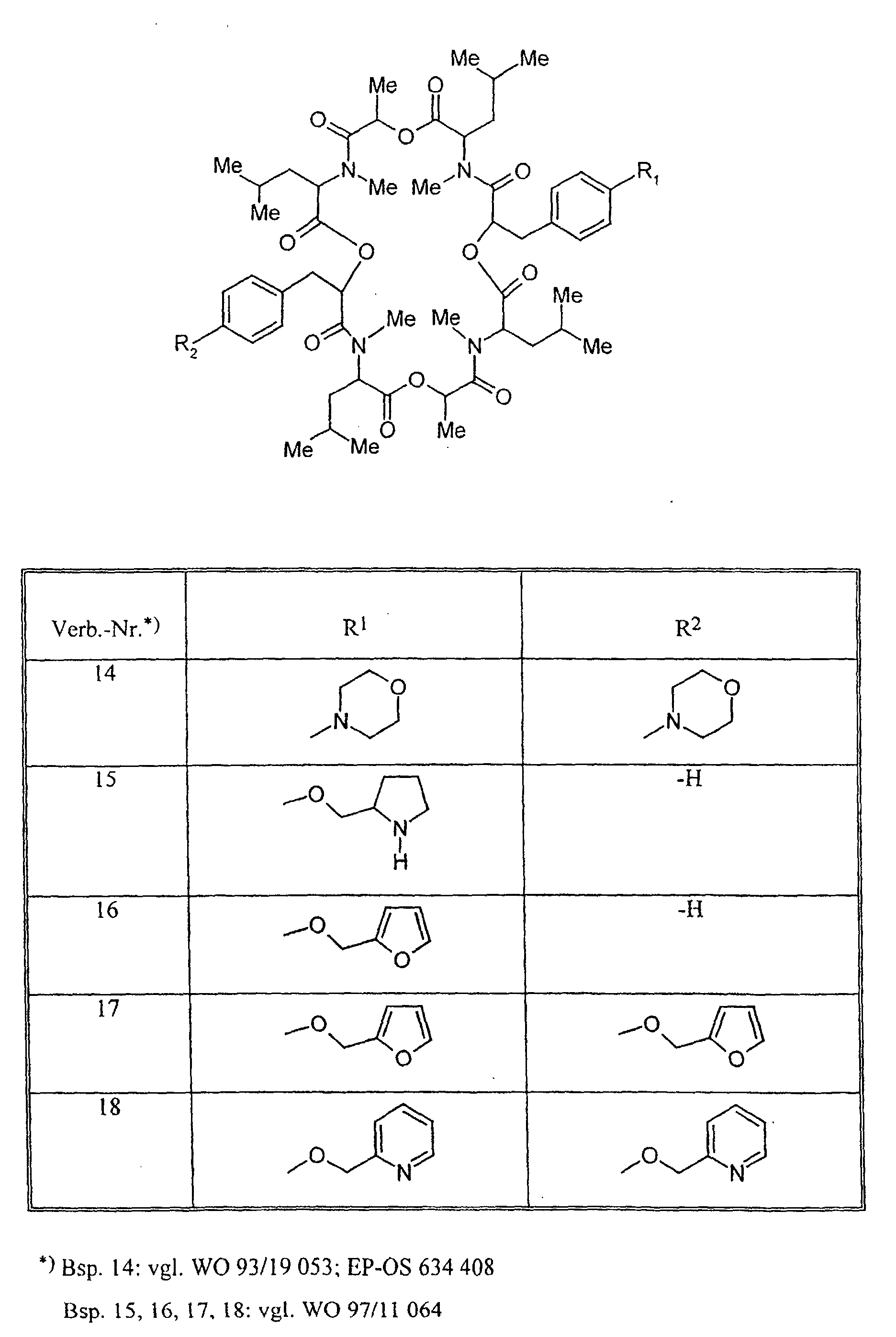

### Beispiel A

### Blowfly-Larven-Test / Entwicklungshemmende Wirkung

| | |
|---|---|
| Testtiere | Lucilia cuprina-Larven (1.-3. Stadium) |
| Lösungsmittel | Dimethylsulfoxid |

20 mg Wirkstoff werden in einem ml Dimethylsulfoxid gelöst. Zwecks Herstellung einer geeigneten Formulierung verdünnt man die Wirkstofflösung mit Wasser auf die jeweils gewünschte Konzentration.

Etwa 20 Lucilia cuprina-Larven werden in ein Teströhrchen gebracht, welches ca. 1 cm³ Pferdefleisch und 0,5 ml der zu testende Wirkstoffzubereitung enthält. Nach 24 und 48 Stunden wird die Wirksamkeit der Wirkstoffzubereitung ermittelt. Die Teströhrchen werden Becher mit Sand-bedecktem Boden überführt. Nach weiteren 2 Tagen werden die Teströhrchen entfernt und die Puppen ausgezählt.

Die Wirkung der Wirkstoffzubereitung wird nach der Zahl der geschlüpften Fliegen nach 1,5-facher Entwicklungsdauer einer unbehandelten Kontrolle beurteilt. Dabei bedeutet 100 %, daß keine Fliegen geschlüpft sind; 0 % bedeutet, daß alle Fliegen normal geschlüpft sind.

Bei diesem Test zeigen z.B. die folgenden Verbindungen der Herstellungsbeispiele überlegene Wirkung gegenüber dem Stand der Technik:

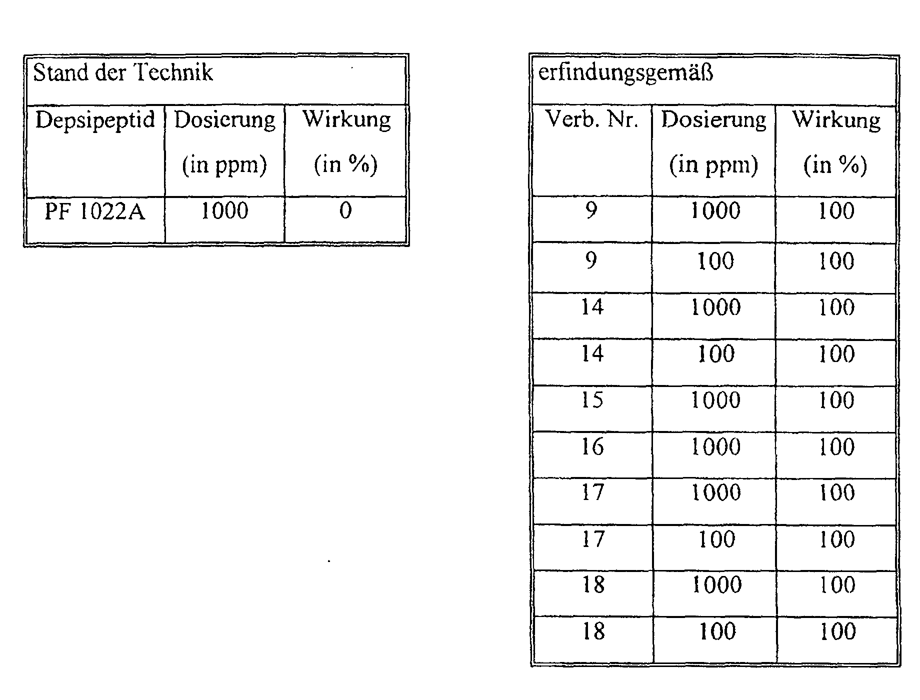

### Beispiel B

### Test mit resistenten einwirtigen Rinderzecken / SP-resistenter Parkhurst-Stamm

| | |
|---|---|
| Testtiere | adulte gesogene Weibchen von Boophilus microplus (Stamm Parkhurst, SP-resistent) |
| Lösungsmittel | Dimethylsulfoxid |

20 mg Wirkstoff werden in einem ml Dimethylsulfoxid gelöst, geringere Konzentrationen werden durch Verdünnen in dem gleichen Lösungsmittel hergestellt.

Der Test wird in 5-fach-Bestimmung durchgeführt. l µl der Lösungen wird in das Abdomen injiziert, die Tiere in Schalen überführt und in einem klimatisierten Raum aufbewahrt. Die Wirkungskontrolle erfolgt nach 7 Tagen auf Ablage fertiler Eier. Eier, deren Fertilität nicht äußerlich sichtbar ist, werden in Glasröhrchen bis zum Larvenschlupf nach etwa 24 Tagen im Klimaschrank aufbewahrt. Eine Wirkung von 100 % bedeutet, daß keine Zecke fertile Eier gelegt hat.

Bei diesem Test zeigen z.B. die folgenden Verbindungen der Herstellungsbeispiele überlegene Wirkung gegenüber dem Stand der Technik.

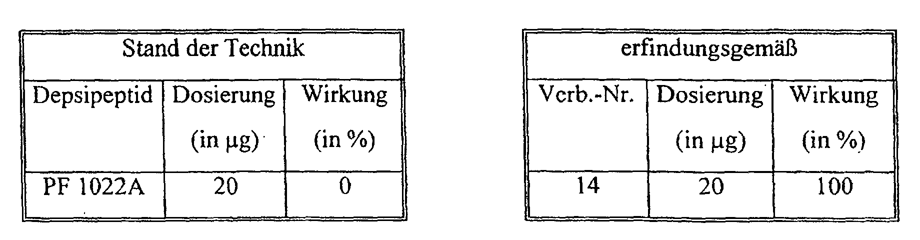

### Beispiel C

### Test mit Katzenflöhen / orale Aufnahme

| | |
|---|---|
| Testtiere | Adulte von Ctenocephalides felis |
| Lösungsmittel | Dimethylsulfoxid (DMSO) |

Zwecks Herstellung einer geeigneten Formulierung wird aus 20 mg Wirkstoff mit 1 ml DMSO eine geeignete Wirkstofflösung hergestellt. 17,5 µl dieser Formulierung werden zu 3,5 ml citriertem Rinderblut gegeben und verrührt.

20 nüchterne adulte Flöhe (Ctenocephalides felis, Stamm "Georgi") werden in eine Kammer (⌀ 2,5 cm) eingesetzt, die oben und untern mit Gaze verschlossen ist. Auf die Kammer wird ein Metallzylinder gestellt, dessen Unterseite mit Parafilm verschlossen ist. Der Zylinder enthält 3 ml Blut-Wirkstofformulierung, die von den Flöhen durch die Parafilmmembran aufgenommen werden kann. Während das Blut auf 37°C erwärmt wird, wird im Bereich der Flohkammern eine Temperatur von 25°C eingestellt. Kontrollen werden mit dem gleichen Volumen DMSO ohne Zusatz einer Verbindung vermischt. Es werden Dreifach-Bestimmungen durchgeführt.

Nach 24 h wird die Mortalität in % (= tote Flöhe) normiert über den Standard Imidacloprid bestimmt.

Verbindungen, die innerhalb von 24 h eine mindestens 24 %ige Abtötung der Flöhe erzielen, werden als wirksam beurteilt.

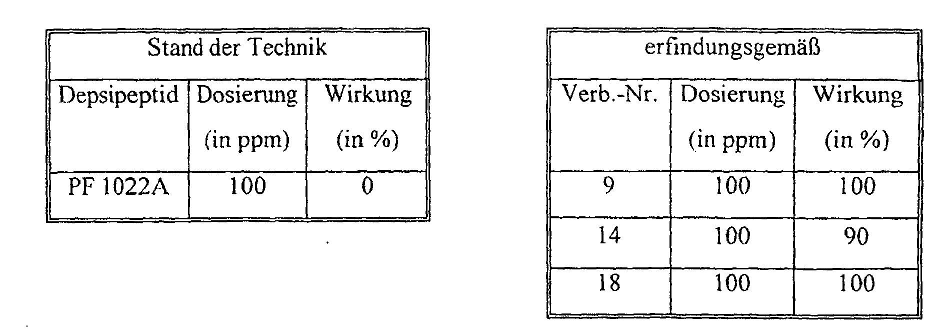

### Beispiel D

### In-vivo Test an Zecken / Mini-Dip am Rind

| | |
|---|---|
| Testobjekt | Alle Stadien von Boophilus microplus (Larven. Metalarven, Nymphen, Metanyphen und Adulte) pyrethroid resistenter Stamm. |
| | |
| Lösung | Wirkstoff 30 %ig in Methylglykol und Emulgator NP 10 im Verhältnis 1:1. |

Zur Behandlung der Rinder werden Konzentrationsschrittc von 1 000. 300, 100, 30, 10 und 1 ppm in einem Volumen von 200 ml eingesetzt. Die zu behandelnde Rinderhaut wird für 1 Min. mit der Wirkstofflösung benetzt.

Rinder werden 14 x in 2-tägigem Abstand mit ca. 3 000 nüchternen 14 bis 28 Tage alten Larven von B. microplus infiziert. Am 23. Tag p.i. werden definierte Flächen auf der Hautoberfläche des Rindes mit der o.a. Wirkstoffzubercitung benetzt. Vom 24. bis 45. Tag p.i. werden die zur Entwicklung kommenden weiblichen adulten Zecken gezählt, die Fertilität der Eigelege dieser Zecken kontrolliert und damit die Wirksamkeit der Wirkstoffzubereitung ermittelt. Dabei bedeutet 100 %, daß keine Zecken mit fertilen Eigelegen gefunden wurden; 0 % bedeutet, daß Anzahl der Zecken und Fertilität der Eigelege vergleichbar der Kontrolle waren.

In diesem Test zeigten die Verbindungen 14, 15, 16 und 18 eine 100 %ige Wirkung gegen B. microplus am Rind bei Wirkstoffkonzentrationen von 1 000 ppm.

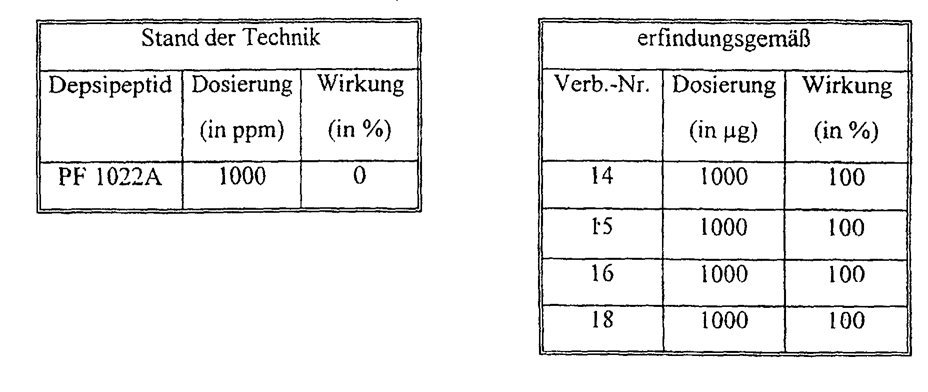

## Patentansprüche

1. Verwendung von Cyclooctadepsipeptiden der Formel (1) 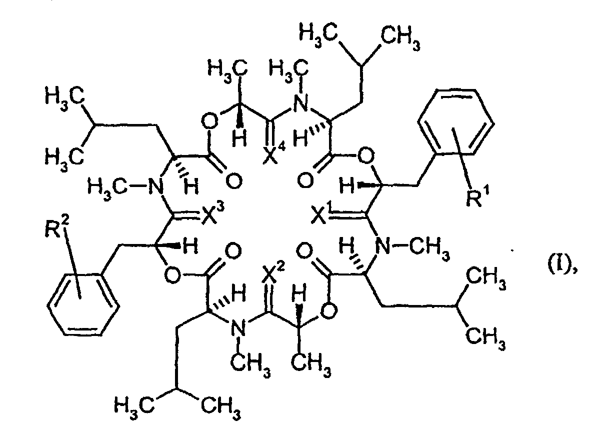 in welcher
R¹ für Wasserstoff, C₁₋₄-Alkyl, Hydroxy, Halogen, C₁₋₄-Alkoxy, C₁₋₄-Alkoxy-C₁₋₄-alkyl, Heterocyclylmethyl, insbesondere Pyridylmethyl, Tetrahydrofuranylmethyl, Pyrrolidinylmethyl, Furylmethyl, Thienylmethyl, Heteroaryl-C₁₋₂-alkoxy, insbesondere Pyridylmethoxy, Tetrahydrofuryl-methoxy, Pyrrolidinyl-methoxy und Furylmethoxy, Nitro, -NR³R⁴, -SO₂-NR³R⁴ steht,
R² für Wasserstoff, C₁₋₄-Alkyl, Hydroxy, Halogen, C₁₋₄-Alkoxy, C₁₋₄-Alkoxy-C₁₋₄-alkyl, Heterocyclylmethyl, insbesondere Pyridylmethyl, Tetrahydrofuranylmethyl, Pyrrolidinylmethyl, Furylmethyl, Thienylmethyl, Heteroaryl-C₁₋₂-alkoxy, insbesondere Pyridylmethoxy, Tetrahydrofuranyl-methoxy, Pyrrolidinyl-methoxy und Furyl-methoxy, Nitro, -NR³R⁴, -SO₂-NR³R⁴ steht,
R³ und R⁴ unabhängig voneinander jeweils für Wasserstoff, gegebenenfalls substituiertes C₁₋₄-Alkyl, Formyl, C₁₋₄-Alkoxycarbonyl, gegebenenfalls substituiertes Arylmethyl, insbesondere Benzyl, oder Heterocyclylmethyl, insbesondere Pyridylmethyl, Tetrahydrofuranylmethyl, Pyrrolidinylmethyl, Furylmethyl, Thienylmethyl, steht, oder
R³ und R⁴ gemeinsam mit dem Stickstoffatom, an das sie gebunden sind, für einen gegebenenfalls substituierten mono- oder polycyclischen, gegebenenfalls überbrückten und/oder spirocyclischen, gesättigten oder ungesättigten Heterocyclus stehen, der ein bis drei weitere Heteroatome aus der Reihe Stickstoff, Sauerstoff und Schwefel enthalten kann,
X¹, X², X³ und X⁴ unabhängig voneinander Sauerstoff oder Schwefel bedeuten,
wobei für den Fall, daß R¹ und R² gleichzeitig für Wasserstoff stehen, mindestens einer der Reste X¹, X², X³ und X⁴ für Schwefel steht,
zur Herstellung von Mitteln
zur Bekämpfung von Ektoparasiten.

2. Ektoparasitizide Mittel, **gekennzeichnet durch** einen Gehalt an cyclischen Depsipeptiden der Formel (I) gemäß Anspruch 1 neben üblichen Streckund/oder Verdünnungsmitteln sowie gegebenenfalls weiteren Formulierungshilfsmitteln.

## Claims

1. Use of cyclooctadepsipeptides of the formula (I) 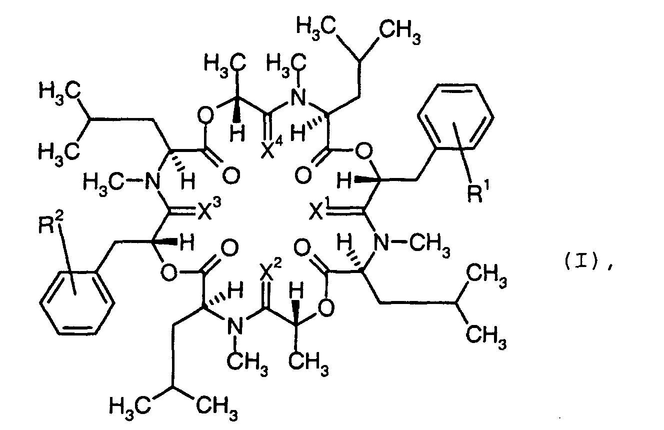 in which
R¹ represents hydrogen, C₁₋₄-alkyl, hydroxyl, halogen, C₁₋₄-alkoxy, C₁₋₄-alkoxy-C₁₋₄-alkyl, heterocyclylmethyl, in particular pyridylmethyl, tetrahydrofuranylmethyl, pyrrolidinylmethyl, furylmethyl, thienylmethyl, heteroaryl-C₁₋₂-alkoxy, in particular pyridyl-methoxy, tetrahydrofurylmethoxy, pyrrolidinyl-methoxy and furylmethoxy, nitro, -NR³R⁴, -SO₂-NR³R⁴,
R² represents hydrogen, C₁₋₄-alkyl, hydroxyl, halogen, C₁₋₄-alkoxy, C₁₋₄-alkoxy-C₁₋₄-alkyl, heterocyclylmethyl, in particular pyridylmethyl, tetrahydrofuranylmethyl, pyrrolidinylmethyl, furylmethyl, thienylmethyl, heteroaryl-C₁₋₂-alkoxy, in particular pyridyl-methoxy, tetrahydrofuranyl-methoxy, pyrrolidinylmethoxy and furyl-methoxy, nitro, -NR³R⁴, -SO₂-NR³R⁴,
R³ and R⁴ independently of one another each represent hydrogen, optionally substituted C₁₋₄-alkyl, formyl, C₁₋₄-alkoxycarbonyl, optionally substituted arylmethyl, in particular benzyl, or heterocyclylmethyl, in particular pyridylmethyl, tetrahydrofuranylmethyl, pyrrolidinylmethyl, furylmethyl, thienylmethyl, or
R³ and R⁴ together with the nitrogen atom to which they are attached represent an optionally substituted mono- or polycyclic, optionally bridged and/or spirocyclic, saturated or unsaturated heterocycle which may contain one to three further heteroatoms from the group consisting of nitrogen, oxygen and sulphur,
X¹, X², X³ and X⁴ independently of one another represent oxygen or sulphur,
where, if R¹ and R² simultaneously represent hydrogen, at least one of the radicals X¹, X², X³ and X⁴ represents sulphur,
for preparing compositions for controlling ectoparasites.

2. Ectoparasiticidal compositions, **characterized in that** they comprise cyclic depsipeptides of the formula (I) according to Claim 1, in addition to customary extenders and/or diluents and, if appropriate, further formulation auxiliaries.

## Revendications

1. Utilisation de cycloooctadepsipetides de la formule (I) : 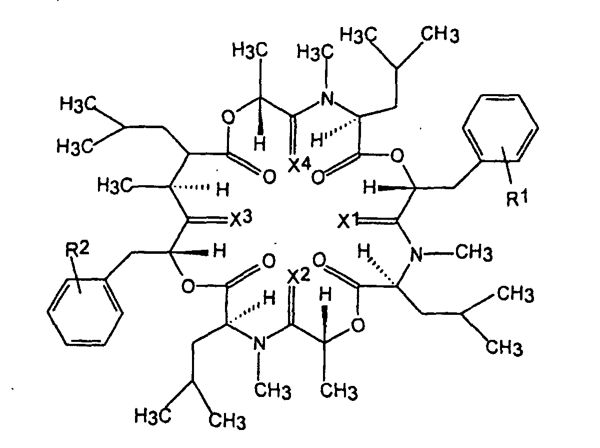 dans laquelle :
R¹ représente l'atome d'hydrogène, un radical alcoyle en C₁₋₄, le radical hydroxyle, un atome d' halogène, un radical alcoxy en C₁₋₄, (alcoxy en C₁₋₄)alcoyle en C₁₋₄, hétérocyclylméthyle, en particulier les radicaux pyridylméthyle, tétrahydrofurannylméthyle, pyrrolidinylméthyle, furylméthyle, thiénylméthyle, un radical hétéroarylalcoxy en C₁₋₂, en particulier les radicaux pyridylméthoxy, tétrahydrofurylméthoxy, pyrrolidinylméthoxy et furylméthoxy, le radical nitro, un radical -NR³R⁴, -SO₂-NR³R⁴ ;
R² représente l'atome d'hydrogène, un radical alcoyle en C₁₋₄, le radical hydroxyle, un atome d'halogène, un radical alcoxy en C₁₋₄, (alcoxy en C₁₋₄)alcoyle en C₁₋₄, hétérocyclylméthyle, en particulier les radicaux pyridylméthyle, tétrahydrofurannylméthyle, pyrrolidinylméthyle, furylméthyle, thiénylméthyle, un radical hétéroarylalcoxy en C₁₋₂, en particulier les radicaux pyridylméthoxy, tétrahydrofurylméthoxy, pyrrolidinylméthoxy et furylméthoxy, le radical nitro, un radical -NR³R⁴, -SO₂-NR³R⁴ ;
R³ et R⁴ représentent indépendamment l'un de l'autre, chaque fois l'atome d'hydrogène, un radical alcoyle en C₁₋₄ le cas échéant substitué, le radical formyle, un radical (alcoxy en C₁₋₄) carbonyle, un radical arylméthyle le cas échéant substitué, en particulier le radical benzyle, ou un radical hétérocyclylméthyle, en particulier le radical pyridylméthyle, tétrahydrofurannylméthyle, pyrrolidinylméthyle, furylméthyle, thiénylméthyle, ou
R³ et R⁴ représentent ensemble, avec l'atome d'azote sur lequel ils sont liés, un hétérocycle le cas échéant substitué, mono- ou polycyclique, le cas échéant ponté et/ou spirocyclique, saturé ou insaturé, qui peut contenir un à trois autres hétéroatomes de la série de l'azote, de l'oxygène et du soufre ;
X¹, X², X³ et X⁴ représentent indépendamment l'un de l'autre, l'atome d'oxygène ou l'atome de soufre,
où dans le cas où R¹ et R² représentent simultanément l'atome d'hydrogène, au moins l'un des restes X¹, X², X³ et X⁴ représente l'atome de soufre,
pour la préparation d'un agent pour lutter contre les ectoparasites.

2. Agent ectoparasiticide, **caractérisé par** une teneur en depsipeptide cyclique de la formule (I) suivant la revendication 1, en plus des agents diluants et solvants usuels, ainsi que le cas échéant, d'autres auxiliaires de fomulation.
